# EUROPEAN PATENT SPECIFICATION

(11) **EP 0 964 347 B1**
(45) Date of publication and mention of the grant of the patent: **17.10.2007**
(21) Application number: 99110241.9
(22) Date of filing: 26.05.1999
(51) Int. Cl.: G06Q 10/00, G08G 1/123

(54) **Vehicle distribution system**
System zum Verteilen von Fahrzeugen
Système pour la distribution de véhicules

(30) Priority: 10.06.1998 JP 17805398; 10.07.1998 JP 21194398
(43) Date of publication of application: 15.12.1999
(73) Proprietor: HONDA GIKEN KOGYO KABUSHIKI KAISHA, Minato-ku, Tokyo (JP)
(72) Inventor: Murakami, Hiroshi, Wako-shi, Saitama (JP); Yano, Shunji, Wako-shi, Saitama (JP); Uehara, Yuji, c/o Honda Engineering Co., Ltd., Sayama-shi, Saitama (JP); Nakamura, Kazuhiro, c/o Honda R & D Co.Ltd,, Senzui 3-chome, Asaka-shi, Saitama (JP)
(74) Representative: Herzog, Markus

(56) References cited:
- US-A- 5 444 442
- PATENT ABSTRACTS OF JAPAN vol. 1997, no. 10, 31 October 1997 (1997-10-31) & JP 9 153098 A (OMRON CORP), 10 June 1997 (1997-06-10)
- PATENT ABSTRACTS OF JAPAN vol. 1997, no. 10, 31 October 1997 (1997-10-31) & JP 9 152914 A (OKI ELECTRIC IND CO LTD), 10 June 1997 (1997-06-10)
- AUGELLO ET AL: "Complementarity between public transport and a car sharing service" PROCEEDINGS OF THE FIRST WORLD CONGRESS ON APPLICATIONS OF TRANSPORT TELEMATICS AND INTELLIGENT VEHICLE-HIGHWAY SYSTEMS, 30 November 1994 (1994-11-30), pages 2985-2992, XP009033619 PARIS, FRANCE

## Description

### DETAILED DESCRIPTION OF THE INVENTION

### Industrial Field of Utilization

The present invention relates generally to a vehicle distribution system and, more particularly, to a vehicle distribution system for stably supplying (i.e., distributing) vehicles to a plurality of ports within an area in keeping with ride demands at each of the ports.

### Prior Art

Where vehicles need to be distributed among a plurality of ports within an area in response to ride demands generated at each of the ports, some ports may lack vehicles to meet their ride demands while others may have excess vehicles. In such a case, a vehicle distribution system may be devised to move (i.e., redistribute) surplus vehicles between ports to replenish shortages of vehicles wherever they occur.

The above kind of vehicle distribution system is designed to deal with vehicle shortages on an a posteriori basis. This means that it takes time to move surplus vehicles from one port to another. If a new ride demand occurs while vehicle redistribution is under way or if some vehicles left ports on their way to other ports before a redistribution process is initiated, a surplus or shortage of vehicles may occur again at any port upon completion of the redistribution. That is, a preferred waiting time cannot be observed stably in the face of varying ride demands.

One solution to the above deficiency may be for vehicles to be redistributed on the basis of predicted ride demand data. Illustratively, a system may be devised to distribute vehicles according to predicted ride demand data based on the number of existing vehicles at each of the ports, on the ride demands currently generated at the port in question, and on past statistical ride demand data regarding the port. One example of that system is a vehicle demand predicting system disclosed in Laid-Open Japanese Patent Application No. Hei 9-153098.

### Problems to be Solved by the Invention

The disclosed vehicle demand predicting system leaves to human judgments the extent to which the vehicle demands predicted through computation are to be taken into account for the actual distribution of vehicles. That is, there can be varying instructions for vehicle distribution based on different decisions at different points in time. As a result, vehicles tend to be distributed in an unstable fashion.

It is therefore an object of the present invention to provide a vehicle distribution system capable of meeting ride demands in a stable manner free of arbitrary human judgments.

### Means for Solving the Problems

In carrying out the invention and according to one aspect thereof, there is provided a vehicle distribution system for distributing vehicles among a plurality of ports within an area in response to ride demands generated at each of the ports, the vehicle distribution system comprising: surplus and shortage computing means for computing either a surplus or a shortage of vehicles at each of the ports by comparing, within a range of search represented by a predetermined period of time at each port, a current ride demand count and predicted ride demand data, with an existing vehicle count and a predicted arriving vehicle count; and vehicle redistributing means for redistributing vehicles from a port having surplus vehicles to a port lacking vehicles on the basis of results of the computation indicating either the surplus or the shortage of vehicles.

With the above structure, the ride demand count and the arriving vehicle count at each port are predicted only within the predetermined range of search (time period). The predictions, the current ride demand, and the existing vehicle count are used as a basis for computing the surplus or shortage of vehicles, whereby vehicles are redistributed from a port having surplus vehicles to a port lacking vehicles.

### Effects of the Invention

As described, the vehicle distribution system according to the invention predicts vehicle ride demands and the number of vehicles in a predetermined range of search. Unlike the conventional system that leaves to human judgments the extent to which the predicted ride demands are to be taken into consideration for vehicle distribution, the inventive system ensures stable distribution of vehicles by eliminating arbitrary instructions for vehicle distribution.

### BRIEF DESCRIPTION OF THE DRAWINGS

Fig. 1 is a schematic diagram showing a typical constitution of a vehicle distribution system embodying the invention;
Fig. 2 is a block diagram showing key functions of a terminal at a port and of a host computer;
Fig. 3 is a schematic diagram illustrating ride demands and vehicle counts in effect at each port before redistribution instructions are issued;
Fig. 4 is a schematic diagram depicting ride demands and vehicle counts in effect at each port after redistribution instructions have been issued;
Fig. 5 is a flowchart of steps for computing a surplus or a shortage of vehicles;
Fig. 6 is a flowchart of steps for determining the redistribution of vehicles based on a computed surplus or shortage of vehicles;
Fig. 7 is a schematic diagram showing typical time periods required to move vehicles among ports;
Fig. 8 is a graphic representation indicating relations between the number of deployed vehicles and the number of redistributed vehicles;
Fig. 9 is a graphic representation depicting relations between the number of deployed vehicles and the average waiting time;
Figs. 10A and 10B are schematic diagrams showing simulated travel times of vehicles moved between ports;
Fig. 11 is a graphic representation depicting simulated relations between the number of deployed vehicles, the average waiting time, and the number of redistributed vehicles;
Fig. 12 is a graphic representation showing actual ride demands occurring over time on a typical day;
Fig. 13 is a graphic representation showing simulated relations between a product of the number of redistributed vehicles against a given deployed vehicle count and the average waiting time on the one hand, and the SD time on the other hand, using search ranges as a parameter;
Fig. 14 is a graphic representation showing relations between the waiting time and the number of vehicles using the accommodating capacity as a parameter;
Fig. 15 is a flowchart of steps constituting a modified process of vehicle redistribution; and
Fig. 16 is a graphic representation showing relations between the waiting time with accommodating capacity taken into account and the number of vehicles deployed within the area, the accommodating capacity of each port being used as a parameter.

### Preferred Embodiments

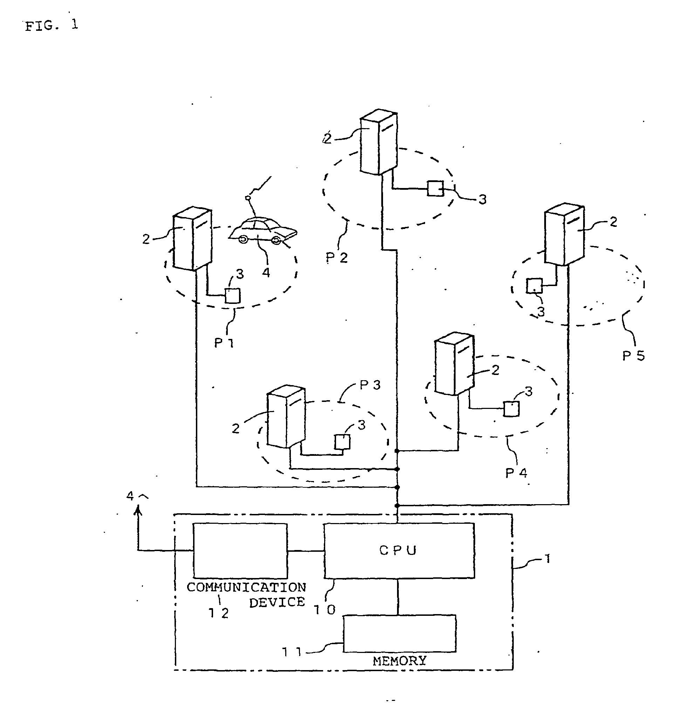

Preferred embodiments of this invention will now be described in detail with reference to the accompanying drawings. Fig. 1 is a schematic diagram showing a typical constitution of a vehicle distribution system embodying the invention. In this example, five ports are assumed to exist within an area. Ports P1 through P5 (generically called the port P hereunder where appropriate) represent parking spaces at such places as a golf course, an airport and a h tel. A plurality of vehicles 4 are assumed to be deployed within the area. Each port P has a terminal 2. Each terminal 2 is furnished with a sensor 3 that detects the combings and goings of vehicles.

The sensor 3 is capable of identifying a vehicle 4 by detecting its vehicle number. The vehicle number to be detected may be that of a number plate attached to the front and rear of each vehicle, or some suitable number provided on the side or top of each vehicle for detection. The vehicle number is not limited to numerals; it may be constituted by identification information using a bar code, characters, marks and/or other symbols. The sensor 3 may be an optical sensor for optically reading such vehicle numbers from vehicles.

Each terminal 2 has an identification unit (not shown) for identifying vehicle users. The identification unit checks an ID number or other data entered by a vehicle user to see if the user is a registered contractor. The ID number or like data should be written preferably on an IC card. The identification unit reads data from the IC card submitted by a user prior to vehicle use. When the use of the vehicle is terminated, the user again submits his or her IC card to the identification unit which, upon reading the card, verifies the end of vehicle use. The terminal 2 also comprises an input unit (not shown) through which users enter desired destinations. The input unit may be constituted by a set of switches corresponding to the port names.

Each vehicle 4 may illustratively be an electric vehicle that runs by itself. When a user is allowed to use a vehicle, the doors of the vehicle is unlocked and the vehicle is made ready to be started. Instead of having its doors automatically unlocked, the vehicle may be unlocked manually by a user utilizing his or her IC card. In any case, it is preferred that the identification information (ID number, etc.) identifying each potential vehicle user carrying an IC card be recognized by the terminal 2 of the port P before the user rides a vehicle.

The terminals 2 are connected to a host computer 1 (called the host hereunder) through communication lines. Data are exchanged between the terminals 2 and the host 1. The terminal 2 of a port P at which a vehicle user wishes to ride a vehicle transmits to the host 1 the vehicle numbers of the existing vehicles and the existing vehicle count at the port P in question, as well as the ID number of the contractor and the ride demand. A demand occurs when a user enters his or her ID number. Each demand includes destination information. Given such an ID number, the host 1 references stored personal information on contractors to decide whether to allow the use of a vehicle for the user in question. Following the decision in favor of the vehicle use, the host 1 allows the terminal 2 to rent a vehicle and to designate a specific vehicle to be rented. The permission to rent a vehicle and the designation of the vehicle to be rented permit the user actually to ride the vehicle. The rent permission and the vehicle designation give rise to what is called a "starting trip."

The terminal 2 of a port P at which a vehicle user riding a vehicle has arrived transmits to the host 1 the vehicle numbers of currently available vehicles and the existing vehicle count at the port P, the contractor ID number of the user which arrived, recognized arrival information (called an arriving trip), and travel data about the contractor. An arriving trip is output when the sensor 3 detects the arrival at the port P of the vehicle 4 corresponding to the starting trip.

The host 1 has computing means (CPU) 10 and a storage device (memory) 11. The CPU 10 in conjunction with the memory 11 performs computations to supply the terminal 2 with permission to rent vehicles and designation of vehicles to be rented on the basis of information entered through the terminal 2. The host 1 also includes a communication device 12 for giving instructions to each vehicle 4. The memory 11 stores predicted ride demand data (called predicted starting trips hereunder) about each port P, as well as contractor information and contractor travel data on each port. Predicted starting trips represent predicted daily demands based on past demand results. Contractor information denotes personal information such as contractor names associated with ID numbers. Contractor travel data are made up of contractors' ride distances and ride times used as accounting information to be used when the contractors are later billed.

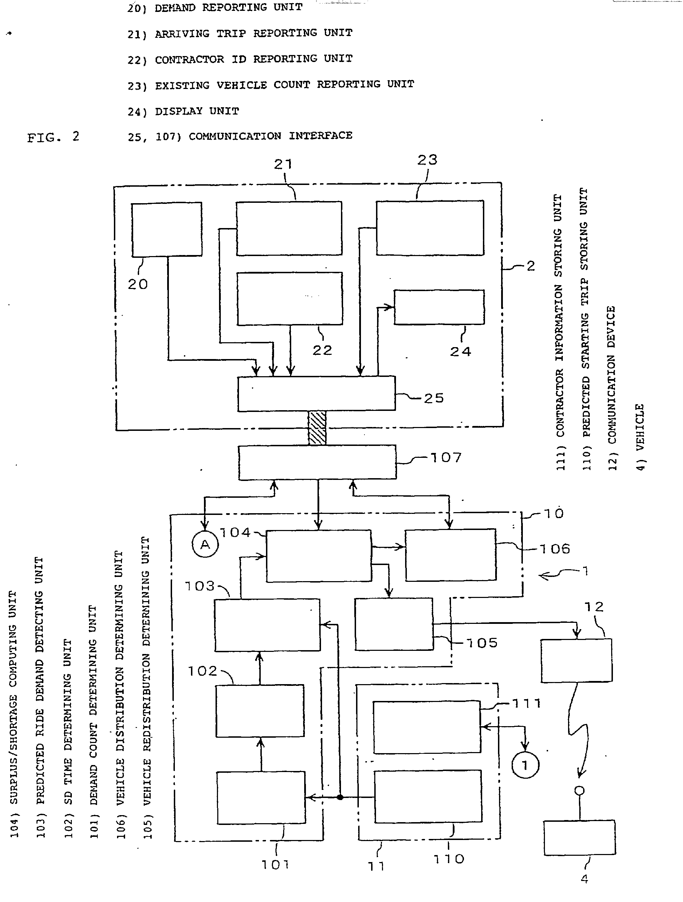

Fig. 2 is a block diagram showing key functions of a terminal 2 and the host 1. The terminal 2 includes a demand reporting unit 20, an arriving trip reporting unit 21, a contractor ID reporting unit 22 and an existing vehicle count reporting unit 23 for reporting respectively demands, arriving trips, contractor IDs and an existing vehicle count to the host. The demand reporting unit 20 reports to the host 1 the occurrence of a demand whenever an ID number entered by a user is recognized. The arriving trip reporting unit 21 notifies the host 1 of arrivals of vehicles detected by the sensor 3. The contractor ID reporting unit 22 informs the host 1 of ID numbers read from IC cards or other medium. The existing vehicle count reporting unit 23 reports the current number of vehicles counted on the basis of the vehicle numbers as well as comings and goings of vehicles detected by the sensor 3.

The terminal 2 also has a display unit 24 that instructs or guides users to ride vehicles. In giving instructions or guidance to users, the display unit 24 relies on permission to rent vehicles or other suitable directives from the host 1. The instructions or guidance may be given as either visual or audio information. The terminal 2 comprises a communication interface 25 for exchanging data with the host 1. If a vehicle is currently available at the port P and if the display unit 24 is capable of issuing an available vehicle instruction immediately after the input of an ID code, the display unit 24 may indicate the applicable vehicle number. If no vehicle is currently available at the port P, the display unit 24 may indicate a predicted waiting time.

The memory 11 of the host 1 has a predicted starting trip storing unit 110 and a contractor information storing unit 111. The predicted starting trip storing unit 110 accumulates daily demand results at each port in the form of time series data, and supplies the CPU 10 with the data denoting predicted starting trips. Presented as predicted starting trips, the past demand results may preferably be stored in accordance with the weather patterns, the time zones of the day, the days of the week, and other suitable criteria. This will allow the CPU 10 to get data on predicted starting trips in a specific time zone on a specific day of the week under a specific weather pattern. The contractor information storing unit 111 stores contractor information including the contractors' travel data. The contractor information is stored beforehand, and the contractors' travel data are entered from the terminals 2.

The CPU 10 is connected via a communication interface 107 to the communication interfaces 25 of the terminals 2. A demand count determining unit 101 of the CPU 10 determines a predicted number of demands occurring per hour on the basis of the predicted starting trips held in the memory 11. Depending on whether the predicted demand count exceeds a reference count, a search depth (SD) time determining unit 102 determines a search range, i.e., a search depth (SD) time which spans predetermined hours (or minutes) starting from the present time and in which to search for predicted starting trips. An algorithm for determining the SD time will be described later.

A predicted ride demand detecting unit 103 reads from the predicted starting trip storing unit 110 predicted starting trips within the SD time determined by the search depth time determining unit 102, and outputs what is read to a surplus/shortage computing unit 104. The surplus/shortage computing unit 104 computes a surplus or a shortage of vehicles based on the demands and existing vehicle count sent from the terminal 2 at each port P, as well as on the above-mentioned predicted starting trips. The computation of the vehicle surplus or shortage takes into account those arriving trips at destination ports which are predicted by the destination information included in the demands.

On the basis of the surplus or shortage of vehicles 4 at each port P, a vehicle redistribution determining unit 105 outputs instructions for moving excess vehicles 4 from one port P to another, i.e., for redistributing vehicles 4. Vehicle redistribution instructions are reported to the vehicles 4 via the communication device 12. Each vehicle 4 has a communication device and an automatic traveling unit allowing the vehicle to respond to redistribution instructions. The automatic traveling unit may be a position detecting system utilizing map data and GPS (global positioning system), or a known system relying on traffic signals and an obstruction monitoring scheme.

If there is any available vehicle, a vehicle distribution determining unit 106 immediately notifies the applicable terminal 2 of permission to rent and designation of the vehicle to be rented. If a vehicle is lacking, the vehicle distribution determining unit 106 computes a waiting time based on a predicted arriving time of a redistributed vehicle designated by the vehicle redistribution determining unit 105. The terminal 2 is notified of the waiting time which is presented to the vehicle user waiting for a vehicle.

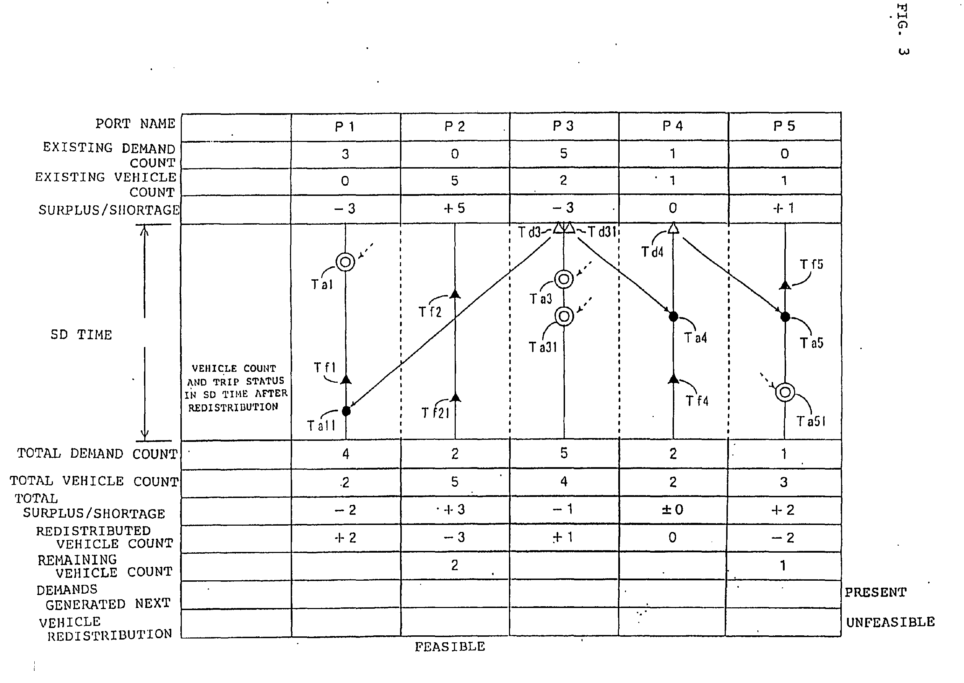

How vehicles are distributed illustratively will now be described. If vehicles were distributed solely on the basis of the existing vehicle count and current demands at each port P, efficient distribution of vehicles would be impossible because of fluctuating demands and constant movements of vehicles resulting in an additional surplus or shortage of vehicles. This bottleneck is circumvented by redistributing vehicles while demands and arriving trips within a predetermined SD time are taken into consideration. Fig. 3 is a schematic diagram showing how the number of vehicles varies at each port P in keeping with the starting and arriving trips at the ports. This diagram takes into account those trips that are predicted to occur in the current SD time but does not consider vehicles to be redistributed.

In Fig. 3, the port P1 has a demand count of 3 and an existing vehicle count of 0. That is, the port P1 lacks three vehicles at present. The port P1 is subject to two arriving trips: an arriving trip Ta1 stemming from a starting trip that occurred earlier at another port, and an arriving trip Ta11 resulting from a starting trip Td3 that occurred at the port P3 at the start of the current CD time. Furthermore, a starting trip Tf1 is predicted to occur. This brings the total demand count to 4. Since two vehicles are available in the current SD time against the demand count of 4, two vehicles are lacking at the port P1.

The port P2 has a demand count of 0 and an existing vehicle count of 5. That is, the port P2 has five surplus vehicles. With starting trips Tf2 and Tf21 predicted to occur at the port P2, the total demand count is brought to 2. Because five vehicles are available in the current SD time against the demand count of 2 at the port P2, three vehicles are in surplus there.

The port P3 has a demand count of 5 and an existing vehicle count of 2. This means that the part P3 currently lacks three vehicles. With two vehicles currently available, the port P3 immediately meets two demands causing starting trips Td3 and Td31 to occur. The port P3 is subject to arriving trips Ta3 and Ta31 stemming from starting trips that occurred at other ports in a previous SD time. With no predicted starting trip, the total demand count remains at 5. Because four vehicles are available in the current SD time against the demand count of 5, the port P3 lacks one vehicle.

The port P4 has a demand count of 1 and an existing vehicle count of 1 and thus has no surplus or shortage of vehicles at present. Because it has one vehicle currently available, the port P4 immediately meets the existing demand, causing a starting trip Td4 to occur. With a starting trip Tf4 predicted to occur at the port P4, its total demand count is brought to 2. Furthermore, an arriving trip Ta4 is expected to occur due to a starting trip originated at the port P3. That is two vehicles are available in the current SD time against the demand count of 2, so that there is no surplus or shortage of vehicles at the port P4.

The port P5 has a demand count of 0 and an existing vehicle count of 1 and thus has one vehicle currently in surplus. The port P5 is subject to two arriving trips: an arriving trip Ta5 stemming from the starting trip Td4 originated at the port P4, and an arriving trip Ta51 derived from a starting trip originated at another port in a previous SD time. With a starting trip Tf5 predicted to occur at the port, its total demand count amounts to 1. When the demand count is 1 against three vehicles available in the current SD time, the port P5 has two surplus vehicles.

Vehicles are redistributed on the assumption that vehicle and demand counts vary in the SD time. Below is a description of a multistage algorithm for vehicle redistribution. In a first stage of the algorithm, the ports with vehicles that may be redistributed within the SD time and the number of these available vehicles are detected. In the above example, the ports P2 and P5 have surplus vehicles that may be redistributed. In a second stage, the remaining number of vehicles following the redistribution of the surplus vehicles is obtained. In a third stage, a check is made to see if the remaining vehicles are enough to met the demands that may occur next. Illustratively, a demand cannot be met immediately if it occurs at a given port P as a result of an arriving trip after all vehicles have been redistributed and before an available vehicle count at the port in question is replenished. In such a case, vehicle redistribution is deemed feasible if the remaining vehicle count is judged enough to cover the newly generated demand.

In the example above, when the port P2 has three surplus vehicles redistributed to other ports, it is still left with two vehicles in surplus. Even after meeting the predicted starting trip Tf2 occurring next, the port P2 has one vehicle in surplus. Thus the port P2 has three vehicles that may be redistributed, and the redistribution is feasible. Meanwhile, when the port P5 has two surplus vehicles redistributed, it is left with one vehicle. After meeting the demand of the predicted starting trip Tf5 occurring next, the port P5 has no surplus vehicle left so that vehicle redistribution is deemed unfeasible.

Preferably, vehicles should be redistributed to ports P short of vehicles from the nearest ports P. If the port P5 is not subject to any new starting demand, then both the port P2 and the port P5 may have their vehicles redistributed. Vehicles are redistributed from whichever port is the closest to any vehicle-lacking port. It is assumed here that the ports P1 and P3 short of vehicles are closer to the port P2 than to the port P5. On that assumption, two vehicles are moved from the port P2 to the port P1 and one vehicle from the port P2 to the port P3.

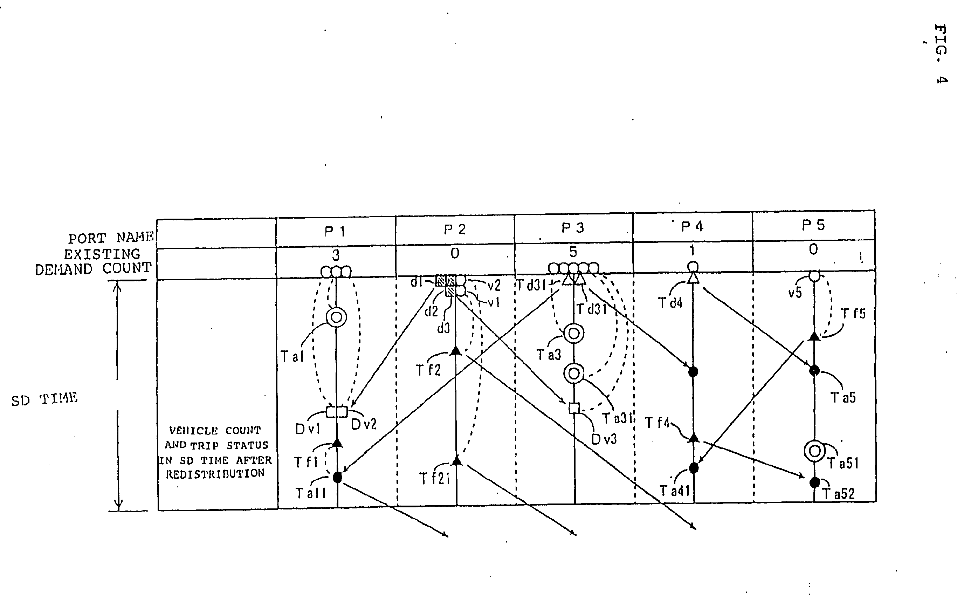

Fig. 4 is a schematic diagram depicting how the number of vehicles varies at each port P in the SD time following vehicle redistribution based on the rearrangements above. In Fig. 4, the first user representing the current demand at the port P1 may ride a vehicle corresponding to the arriving trip Ta1. The second and the third users may ride two vehicles (Dv1, Dv2) redistributed from the port P2. The user representing the predicted starting trip Tf1 may ride a vehicle provided by the arriving trip Ta11.

The port P2 has two vehicles (d1, d2) redistributed to the port P1 and one vehicle (d3) moved to the port P3. The user corresponding to the predicted starting trip Tf2 may ride a currently available vehicle (V1), and the user representing the predicted starting trip Tf21 may ride another currently available vehicle (V2).

The port P3 with its currently available two vehicles can immediately meet two of its five demands. That is, the first and the second users may ride vehicles represented by the starting trips Td3 and Td31. The third and the fourth users may ride vehicles provided by the arriving trips Ta3 and Ta31. The fifth user may ride a vehicle (Dv3) redistributed from the port P2.

The port P4 with its currently available one vehicle can immediately meet one demand. That is, the user may ride a vehicle of the starting trip Td4. Another user corresponding to a predicted starting trip may ride a vehicle of the arriving trip Ta4. The port P4 is shown here receiving an arriving trip Ta41, which stems from the predicted starting trip Tf5 originated at the port T5 and which was not taken into consideration for vehicle redistribution because it was not predictable at the port P4.

The port P5 has one vehicle available but is subject to no demand. This means that a starting trip will not occur immediately. The user corresponding to the predicted starting trip Tf5 may ride the existing vehicle V5. Vehicles of the subsequent arriving trips Ta5 and Ta51 remain undistributed. The port P5 is shown getting an arriving trip Ta52, which stems from the predicted starting trip Tf4 originated at the port P4 and which was not taken into consideration for vehicle redistribution because it was not predictable at the port P5. Alternatively, the arriving trip Ta52 may be taken into account for vehicle redistribution based on statistical data.

As a result of the vehicle redistribution above, the ports P1 through P3 meet all demands in the SD time without surplus or shortage of vehicles. The port P4 has one excess vehicle left and the port P5 has three vehicles left in surplus.

In the above example, all demands have been met in the current SD time. If there are any vehicles for which the demands were not met within the SD time in question, they will be carried over to the vehicle redistribution process in the next SD time. If a maximum waiting time is determined beforehand and if that maximum waiting time is exceeded in the current SD time, demands are met by redistributing available vehicles including the vehicles at the ports P that were determined earlier not to be subject to vehicle redistribution.

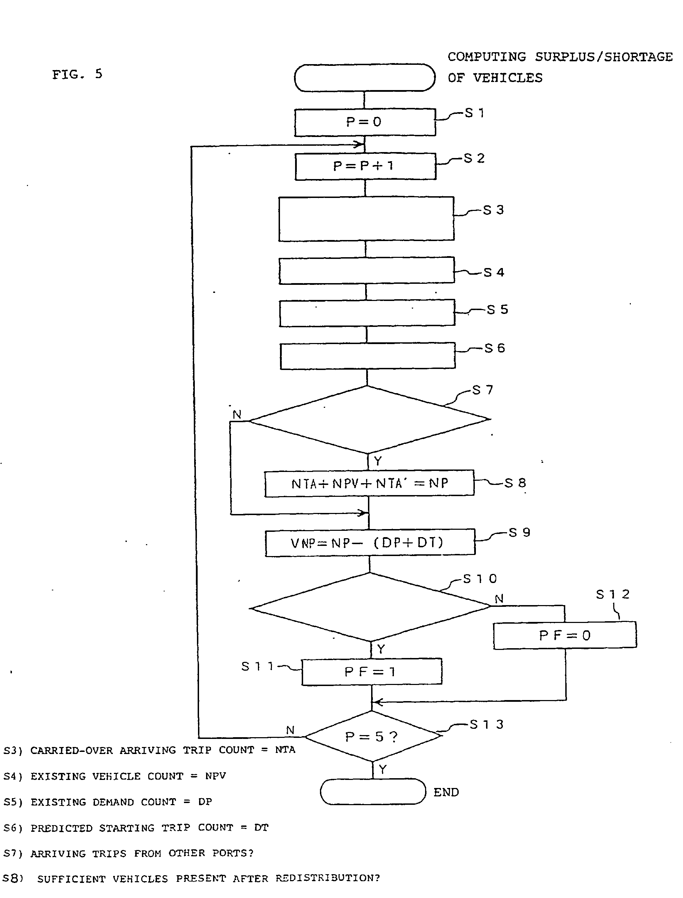

The above processing of vehicle redistribution will now be described with reference to a flowchart. Fig. 5 is a flowchart of steps for computing any surplus or shortage of vehicles being distributed. In step S1 of Fig. 5, a value of 0 is set to a parameter P representing a given port P. In step S2, the parameter P is incremented by 1. The steps that follow concern the port P represented by the parameter P. In step S3, the number of carried-over arriving trips, i.e., the number of arriving trips based on the starting trips that had occurred up to the preceding computation process, is set to a parameter NTA. In step S4, an existing vehicle count is set to the parameter NPV. In step S5, an existing demand count is set to a parameter DP. In step S6, a predicted starting trip count is set to a parameter DT.

In step S7, a check is made to see if any arriving trips occur in the current SD time. The check is based on the computations verifying whether any starting trips occur at any other ports, whether the destination information included in demands that generated these starting trips includes the own port, and whether any of such arriving trips will reach the own port within the current SD time. The computations take into account the known distances between the ports configured and the expected travel speeds of the vehicles involved. If any arriving trips are detected in step S7, step S8 is reached. In step S8, the number of arriving trips (NTA') is added to the arriving trip count NTA as well as the existing vehicle count NPV. The sum denotes an available vehicle count NP.

In step S9, a surplus or shortage of vehicles is computed. Specifically, the existing demand count DP and the predicted starting trip count DT are subtracted from the available vehicle count NP in order to acquire a surplus/shortage of vehicles. In step S10, a check is made to see if the number of available vehicles following vehicle redistribution is sufficient. The decision of step S10 is made on the basis of whether there are any vehicles left after redistribution of the vehicles judged to be in surplus upon computation of the surplus/shortage of vehicles and whether these remaining vehicles are enough to meet demands that may subsequently occur. If the result of the check in step S10 is affirmative, step S11 is reached. In step S11, a flag PF is set to indicate that vehicle redistribution of feasible. If vehicle redistribution is deemed unfeasible, step S12 is reached and the flag PF is cleared. In step S13, a check is made to see if the parameter P has reached 5, i.e., whether the surplus or shortage of vehicles has been computed for all ports configured. If the result of the check in step S13 is negative, step S2 is reached again. The computing process is repeated until the parameter P is found to have reached 5 covering all ports P1 through P5.

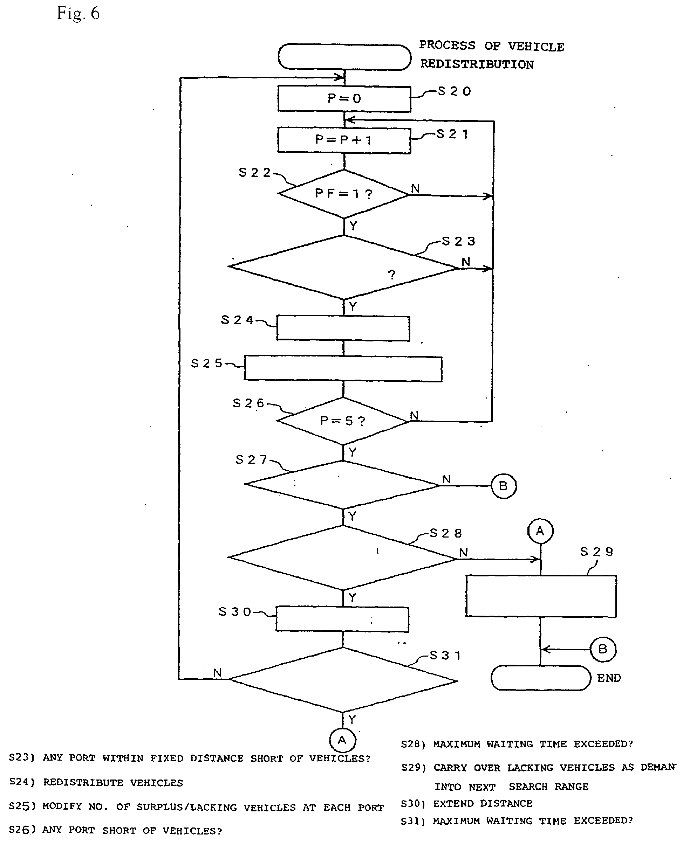

What follows is a description of how vehicles are redistributed illustratively on the basis of the computation of a surplus or a shortage of vehicles. In step S20 in a flowchart of Fig. 6, a value of 0 is set to the parameter P representing a given port P. In step S21, the parameter P is incremented by 1. In step S22, a check is made to see if the flag PF is set indicating the presence of available vehicles at the port P for redistribution. If the flag PF shows vehicle redistribution to be feasible, step S23 is reached. In step S23, a check is made to see if any port within a predetermined distance from the port P lacks vehicles. The check of step S23 is intended to make sure that any available vehicles are redistributed preferentially to the nearest port within the predetermined minimum distance from each port having surplus vehicles.

If the result of the check in step S23 is affirmative, step S24 is reached. In step S24, vehicles are redistributed from the port P in question to other ports short of vehicles. There may be cases, however, in which vehicles are in fact unavailable at the moment despite the vehicles being counted as available within the SD time. Thus only those vehicles that are currently available will be redistributed. The redistribution of vehicles is followed by step S25. In step S25, the number of surplus or lacking vehicles at each port is changed to reflect the altered number of vehicles there following the redistribution.

In step S26, the parameter P is checked to see if all ports have been processed. If the result of the check in step S26 is affirmative, step S27 is reached. In step S27, a check is made to see if there still exist ports short of vehicles. If no port is found to be short of vehicles in step S27, the processing is terminated. If any port is found to lack vehicles, step S28 is reached. In step S28, a check is made to see if a predetermined maximum waiting time is exceeded in which no vehicles are to be redistributed within the current SD time. If the waiting time is not exceeded, step S29 is reached. In step S29, the lacking vehicles are carried over as demands into the next SD time. That is, these vehicles persist as existing demands in the next process of computing the surplus or shortage of vehicles.

If the maximum waiting time is exceeded, a search is made for surplus vehicles at more distant ports. Specifically, a longer distance is established in step S30 to expand the range of ports subject to the search.

With the applicable distance thus extended, a remote port may be found to possess surplus vehicles, but an attempt to redistribute vehicles from that port may be judged to exceed the maximum waiting time. Given that possibility, in step S31, a check is made to see if the maximum waiting time is exceeded in an attempt to resolve the shortage of vehicles through vehicle redistribution from any port within the newly established distance. If the maximum waiting time is found to be exceeded in step S31, the attempt to redistribute vehicles from faraway ports is abandoned and step S29 is reached. In step S29, arrangements are made so that the shortage of vehicles will be replenished in the next SD time.

If the maximum waiting time is not found to be exceeded in step S31, step S20 is reached again. In step S23 following step S30, a check is made to see if any port within the newly extended distance from the port P lacks vehicles.

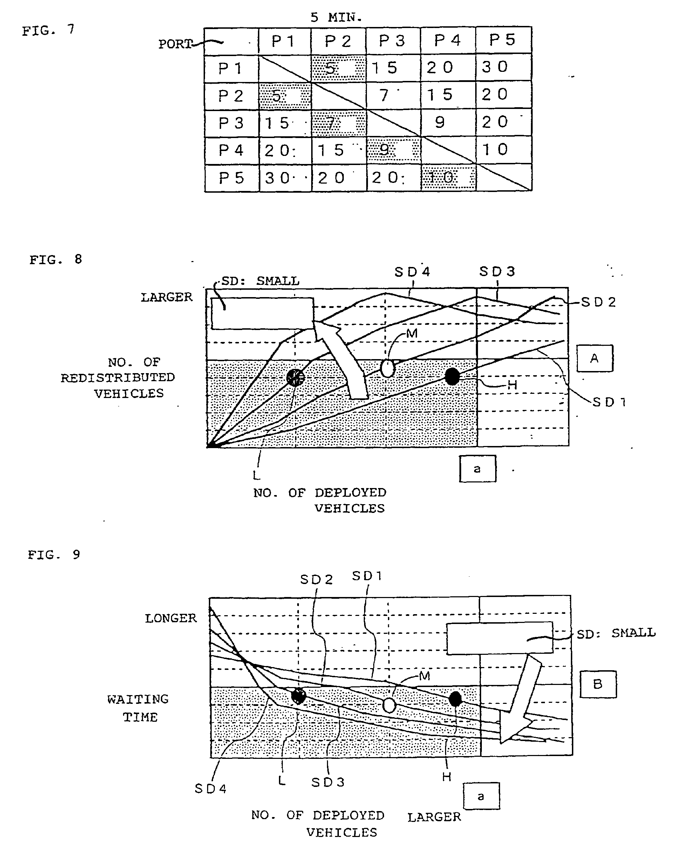

Below is a description of an algorithm for setting the SD time. Fig. 7 is a schematic diagram showing typical time periods required to redistribute vehicles among the ports involved. As shown in Fig. 7, it takes a maximum of 30 minutes to redistribute a vehicle from one port to the farthest port, and a minimum of 5 minutes from one port to the nearest port. As evident from Fig. 7, a number of vehicles determined to be redistributed in an SD time of less than five minutes will not reach their destination ports within that SD time. In an SD time of at least five minutes and less than seven minutes, vehicles may be redistributed only between the ports P1 and P2. In an SD time of at least seven minutes and less than nine minute, vehicles may be redistributed only between the ports P1 and P2 and between the ports P2 and P3. Examining the SD time frame in this manner reveals that vehicles may be redistributed among all ports in an SD time of at least 30 minutes. As described, to redistribute vehicles requires establishing an SD time equivalent to at least a minimum period of time needed to move vehicles between ports P. In the example of Fig. 7, the SD time is at least five minutes.

The SD time should be shorter than the maximum waiting time. Given a maximum waiting time of 15 minutes, the SD time should be set for less than 15 minutes. In that case, vehicles may be redistributed between the ports P1 and P2; between the ports P2 and P3; between the ports P3 and P4; and between the ports P4 and P5. If vehicles are allowed to travel automatically for redistribution, the time it takes to travel between ports is obviously determined by the velocity of such automated movement.

Described below is an algorithm for determining the SD time in connection with the number of vehicles deployed. Where as many vehicles as the total number of demands are allocated to a given port P, there is obviously no need to redistribute any vehicles to that port P. The smaller the number of vehicles allocated to a port, the greater the number of vehicles to be redistributed to that port. It follows that if a large number of vehicles are deployed to meet only a limited need for redistributing vehicles, the SD time tends to be shorter and the waiting time at each port P is more likely to be reduced.

Since deployment of an unlimited number of vehicles is not economical, it is desirable to reduce the vehicle count by prolonging the SD time and by making good use of the vehicle redistribution process. An inordinately long SD time coupled with a small number of deployed vehicles can prolong waiting time. Although longer SD time periods can stretch waiting time, an increasing number of arriving trips are expected from other ports so that the number of redistributed vehicles becomes relatively small. In any case, an optimum SD time should be determined through an overall trade-off between the number of deployed vehicles, the number of redistributed vehicles, and the waiting time.

Fig. 8 is a graphic representation illustrating relations between the number of deployed vehicles and the number of redistributed vehicles using the SD time as a parameter, and Fig. 9 is a graphic representation depicting relations between the number of deployed vehicles and the average waiting time also using the SD time as a parameter. In Fig. 8, on the assumption that the number of deployed vehicles is at most "a" and that the number of redistributed vehicles is at most "A," reducing the deployed vehicle count lowers the redistributed vehicle count in the same SD time (assuming SD1 > SD2 > SD3 > SD4). On the other hand, reducing the deployed vehicle count prolongs the average waiting time, as shown in Fig. 9. That is, the number of redistributed vehicles declines when the number of deployed vehicles is reduced, which results in a prolonged waiting time.

It follows that to keep the average waiting time from exceeding its upper limit B requires increasing the number of redistributed vehicles. This in turn necessitates shortening the SD time. In other words, to reduce the redistributed vehicle count requires prolonging the SD time; to minimize the average waiting time requires shortening the SD time.

If points L, M and N are established illustratively as shown in Figs. 8 and 9, both the upper limit B of the average waiting time and the maximum redistributed vehicle count A are satisfied at each of the points. Thus any one of the three factors, i.e., deployed vehicle count, redistributed vehicle count and average waiting time, may be selected to receive priority in accordance with what is specifically needed at a given point in time (e.g., by business-related decision).

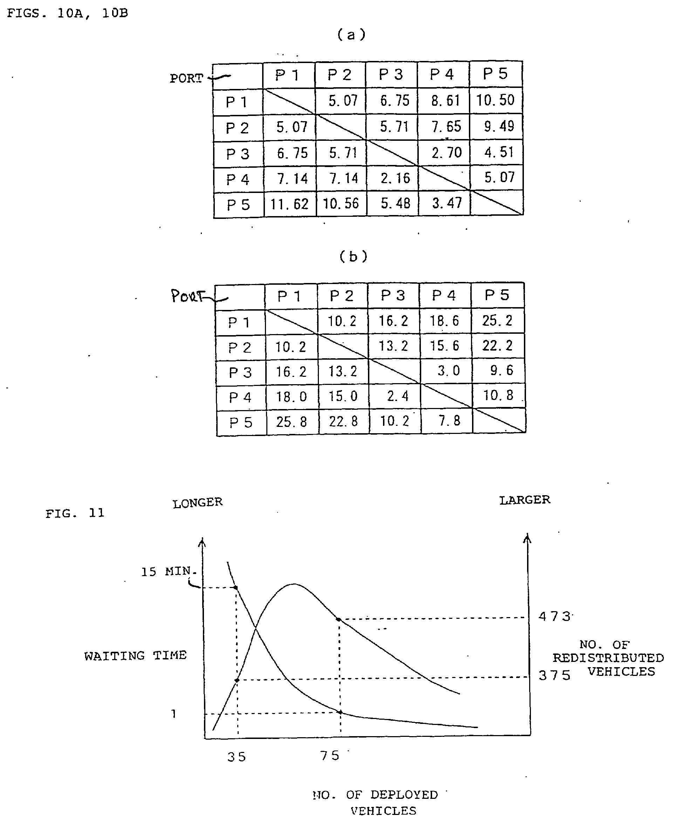

An example in which specific numbers are simulated will now be described. Figs. 10A and 10B are schematic diagrams showing travel times among the ports P1 through P5, whereby area sizes are determined. Fig. 10A lists typical travel times in effect when users drive vehicles (at 48 km/h), and Fig. 10B gives typical travel times in effect when vehicles travel unattended (at 16 km/h). A total of 75 vehicles are deployed, each port being assigned 15 vehicles. The maximum average waiting time is set for one minute because this simulation example gives priority to the waiting time.

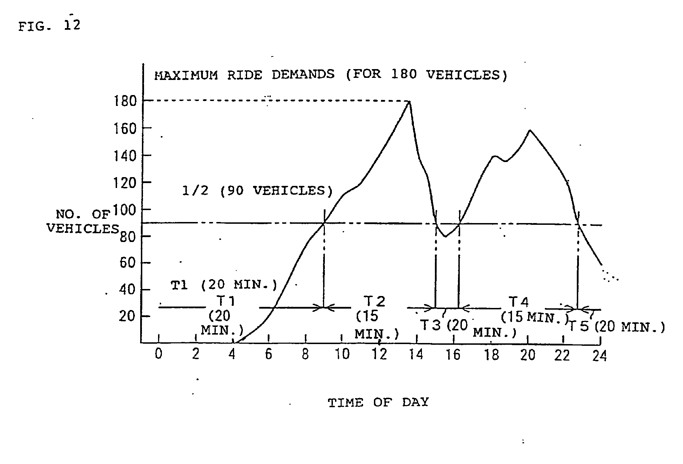

Fig. 11 is a graphic representation depicting relations between the number of deployed vehicles, the waiting time, and the number of redistributed vehicles under the simulation conditions mentioned above. The SD time is set for 20 minutes. Where the maximum average waiting time is set for one minute in Fig. 11, the number of vehicles needed to be deployed is 75, and the number of vehicles redistributed under these conditions is 473.

The SD time need not be fixed for the whole day and may be varied depending on demands. Fig. 12 is a graphic representation showing actual demands occurring on a typical day, i.e., the figure plots statistical ride demand data regarding all ports. The day's total demands (about as many as all starting trips) amount to about 1,800 trips. As illustrated in Fig. 12, the demands typically fluctuate considerably throughout the day. When there are many demands, the SD time should preferably be shortened in order to maximize the number of redistributed vehicles thereby minimizing prolongation of the waiting time. Illustratively, one-half of the maximum predicted ride demands (maximum predicted demands) within a day may be selected as a reference level. When the predicted demands fall below the reference level, the SD time may be set for 20 minutes; when the predicted demands are on or above the reference level, the SD time may be shortened to 15 minutes. If the maximum predicted demands are assumed to be at 180 vehicles in Fig. 11, the reference level for altering the SD time is set for 90 vehicles. Thus the SD time is set for 20 minutes in time zones T1, T3 and T5; and for 15 minutes in time zones T2 and T4.

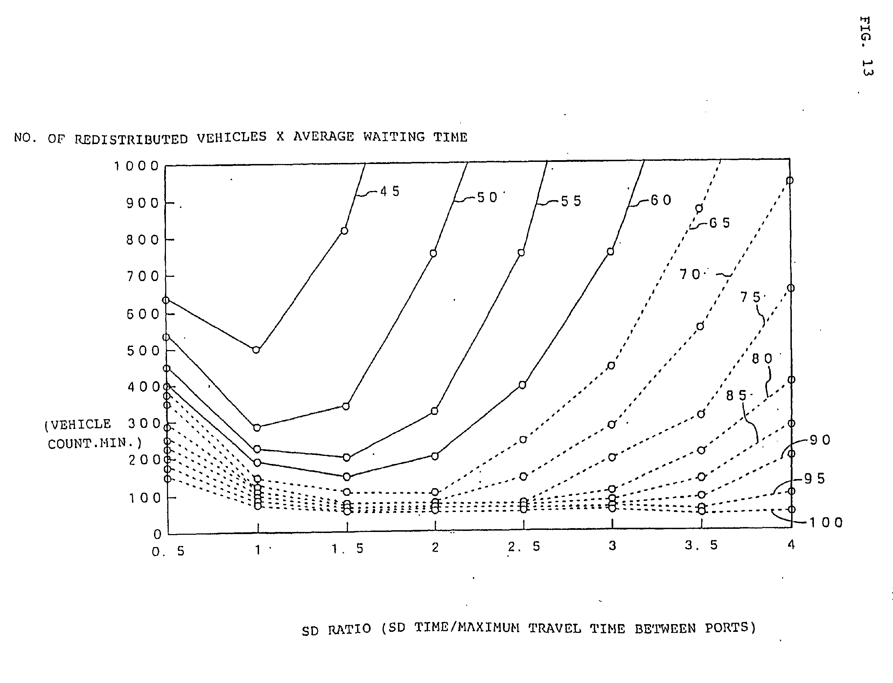

Other criteria for setting the SD time will now be described. Fig. 13 is a graphic representation showing simulated relations between a product of the redistributed vehicle count and the average waiting time (the product is called the distribution coefficient hereunder) on the one hand, and the SD time on the other hand, using the number of deployed vehicles as a parameter. The data in Fig. 13 apply when vehicles being redistributed travel at 35 km/h. Each SD time period is indicated in terms of the ratio of the SD time in question with respect to the travel time (20 minutes) between the farthest of the multiple ports configured (the ratio is called the SD ratio hereunder). The smaller the distribution coefficient, the more efficient the system becomes. That is because shorter waiting times signify fewer occasions on which vehicles are moved empty of riders.

As indicated in Fig. 13, the distribution coefficient is conspicuously minimal when the number of deployed vehicles is below a certain level. Specifically, in areas where the number of deployed vehicles is less than 60 and where the SD ratio is between 1 and 1.5 or thereabout, the distribution coefficient reaches its minimum level. In areas where the number of deployed vehicles is 60 or higher, the distribution coefficient is not conspicuously minimal. That is, the distribution coefficient changes little with regard to SD ratio fluctuations. In other words, in areas where a large number of vehicles are deployed, establishing the SD time according to strict criteria does not necessarily yield expected good results because of the leeway provided by the sufficient number of vehicles.

If a slightly insufficient number of vehicles are deployed to meet demands, selecting a suitable SD time makes it possible to construct an economical system with a low distribution coefficient. In the example of Fig. 13, an efficient system is constituted if, with fewer than 60 vehicles deployed, the SD ratio is set between 1 and 1.5. In areas where the number of deployed vehicles is less than 45, the average waiting time is at least 10 minutes because there are too few vehicles to meet demands. In the latter case, the distribution coefficient reaches its minimum level when the SD ratio is 1 or thereabout.

The embodiment described above does not take into account the number of vehicles that may be accommodated at each port, i.e., the capacity of a parking lot of each port. If the number of vehicles that may be parked at each port (called the accommodating capacity hereunder) is small while the total number of deployed vehicles within the area is considerable, congestion can occur when vehicles are coming in and going out. This can result in a prolonged waiting time despite the large number or vehicles deployed.

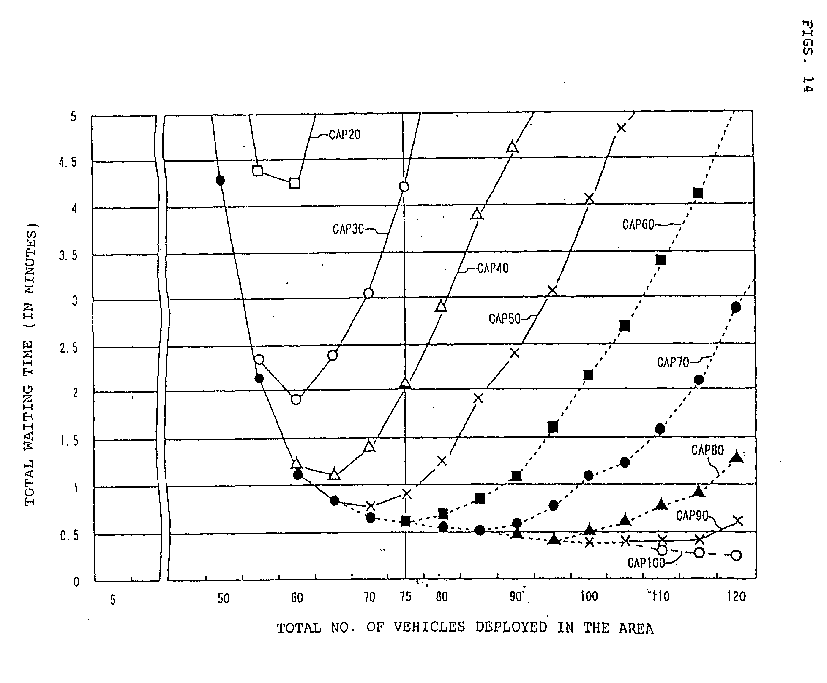

Fig. 14 is a graphic representation showing relations between the waiting time and the number of vehicles using the accommodating capacity as a parameter. As indicated in Fig. 14, there are certain vehicle counts at which the waiting time is minimal, and increasing the number of vehicles does not necessarily shorten the waiting time. Illustratively, if the number of all deployed vehicles is 75, the waiting time is about 4 minutes for the accommodating capacity (CAP) of 30 vehicles, 2 minutes for the capacity of 40 vehicles, and 1 minute for the capacity of 50. If the number of accommodated vehicles were 20, the waiting time would be too long to be shown in the figure.

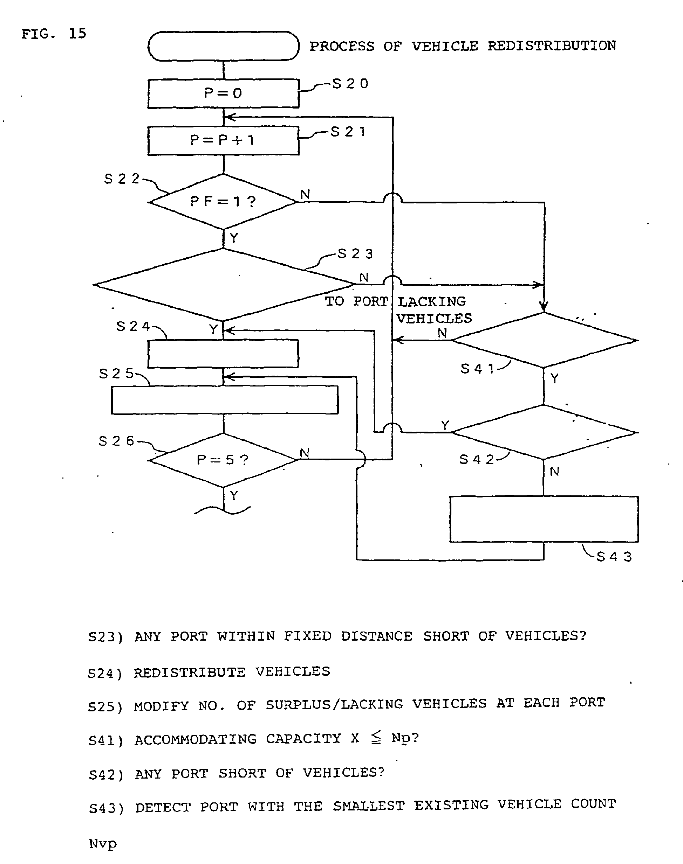

In view of the difficulty above, a second embodiment described below is designed to redistribute vehicles by taking the accommodating capacity of each port into consideration. Fig. 15 is a flowchart of steps constituting another process of vehicle redistribution, a modification of the vehicle redistribution process in Fig. 6. Of the step numbers in Fig. 15, those already used in Fig. 6 designate like or corresponding steps. In Fig. 15, if the result of the check in step S22 or S23 is negative, i.e., if the port in question has no vehicles that may be redistributed or if no port within the predetermined short distance lacks vehicles, then step S41 is reached.

In step S41, a check is made to see if the accommodating capacity CAP is at most the number of vehicles NP that may be used in the SD time. If the result of the check in step S41 is affirmative, i.e., if a number of vehicles greater than the accommodating capacity of the port in question are predicted to arrive within the SD time, then step S42 is reached. In step S42, a check is made to see if any other port lacks vehicles. If any port is found to be short of vehicles, step S24 is reached in which vehicles are redistributed to the port in question.

If there are no ports short of vehicles, step S42 is followed by step S43. In step S43, the port currently having the fewest vehicles is detected. When the port with the smallest existing vehicle count is identified, step S24 is reached. In step S24, vehicles are redistributed to the port in question. After vehicle redistribution, step S25 is reached. In step S25, the number of excess or lacking vehicles at each port is updated to reflect the latest vehicle counts. Step S26 is followed by the same process as that made up of steps S27 through S31 in Fig. 6; the process is omitted from Fig. 15 and will not be described further.

If the sum of the existing vehicle count and the predicted arriving vehicle count is judged to exceed the accommodating capacity of the own port, vehicles are redistributed to a vehicle-lacking port that may not be located in the vicinity, whereby congestion at the own port is averted. If no port is found to lack vehicles, vehicles are redistributed to the port currently having the fewest vehicles so as to avoid congestion at the own port. If a plurality of ports are found to have a small number of vehicles each, vehicles may alternatively be redistributed to the nearest of these ports.

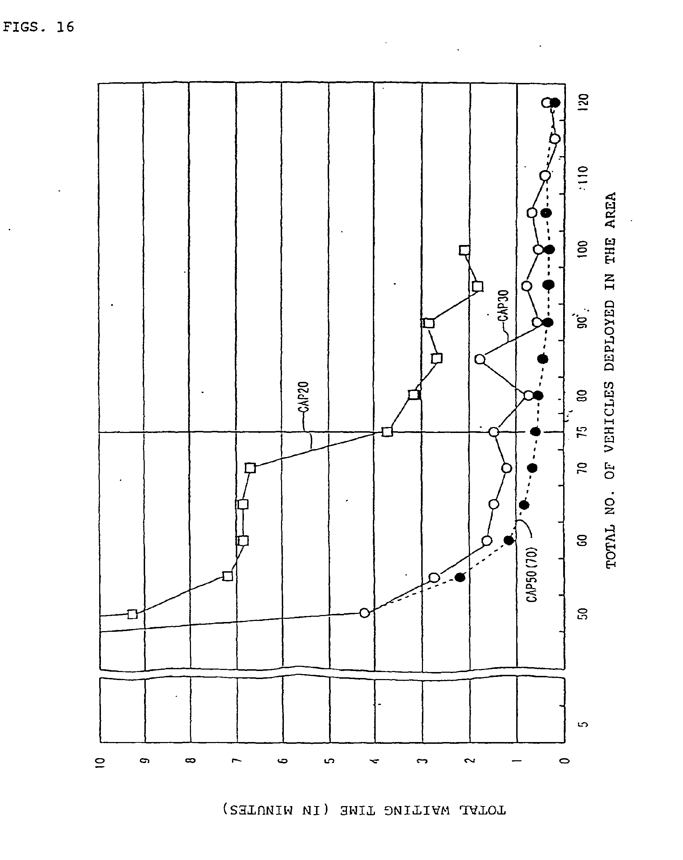

Fig. 16 is a graphic representation showing relations between the waiting time with accommodating capacity taken into account and the number of vehicles deployed within the area, the accommodating capacity of each port being used as a parameter. As depicted in Fig. 16, the larger the number of deployed vehicles, the shorter the waiting time at all ports regardless of the accommodating capacity thereof. In particular, even where the accommodating capacity is as small as 20 vehicles, the waiting time is at most 4 minutes provided the number of vehicles is at least 75.

As described, where vehicles are redistributed with the accommodating capacity at each port taken into consideration, the waiting time can be reduced in keeping with the number of deployed vehicles. The deployed vehicle count is determined by taking into account both the waiting time and the number of vehicles to be redistributed. Unlike the case of Fig. 14 in which a growing number of deployed vehicles causes the waiting time to start getting longer at some point, the setup of Fig. 16 allows the number of deployed vehicles to be determined within a wide range illustratively based on business decisions.

Although the above-described embodiments have been shown envisaging a system in which the vehicles 4 are run automatically for redistribution, this is not limitative of the invention. Alternatively, vehicles 4 may be redistributed by human drivers or may be towed by tractor or some other appropriate vehicle for the purpose. The invention applies not only to the system of distributing vehicles that are driven by users but also to a distribution system for taxis and limousines. Object

An object of the present invention is to provide a vehicle distribution system that establishes a range of search beforehand and, in distributing vehicles, predicts ride demands and the number of vehicles within that range. Means for Achieving the Object

A predetermined number of vehicles 4 are deployed at ports P11 through P5 within an area. Each terminal 2 notifies a host 1 of an existing vehicle count, ride demands, commands, destination information and arriving information at the port. The host 1 has predicted ride demand data stored in a memory 11. Given a predetermined range of search, the host 1 computes for each port a surplus or a shortage of vehicles based on the predicted ride demand data and the information entered through the terminal 2. On the basis of the computed results, the host 1 moves (redistributes) vehicles from a port having excess vehicles to a port lacking vehicles.

## Claims

1. A vehicle distribution system for distributing vehicles (4) among a plurality of ports (P1, P2, P3, P4, P5) within an area in response to ride demands generated at each of said ports (P1, P2, P3, P4, P5), said vehicle distribution system comprising:
predicted ride demand data storing means (11) for storing predicted ride demand data established on the basis of statistical ride demand data regarding all ports (P1, P2, P3, P4, P5);
vehicle count detecting means (23) for detecting an existing vehicle count at each of said ports (P1, P2, P3, P4, P5);
demand detecting means (20) for detecting ride demand information including a current ride demand count and destination information regarding each of said ports (P1, P2, P3, P4, P5);
arriving vehicle predicting means for predicting arrivals of vehicles (4) at each port (P1, P2, P3, P4, P5) from other ports (P1, P2, P3, P4, P5) as a predicted arriving vehicle count based on said destination information;
surplus and shortage computing means (104) for computing either a surplus or a shortage of vehicles (4) at each of said ports (P1, P2, P3, P4, P5) by comparing, within a range of search (SD) represented by a predetermined period of time at each port (P1, P2, P3, P4, P5), said current ride demand count and said predicted ride demand data, with said existing vehicle count and said predicted arriving vehicle count; and
vehicle redistributing means (105) for redistributing vehicles (4) from a port (P1, P2, P3, P4, P5) having surplus vehicles (4) to a port (P1, P2, P3, P4, P5) lacking vehicles (4) on the basis of results of the computation indicating either said surplus or said shortage of vehicles (4).

2. A vehicle distribution system according to claim 1, wherein said range of search (SD) is set for at least a minimum travel time required to move vehicles (4) between ports (P1, P2, P3, P4, P5) for redistribution.

3. A vehicle distribution system according to claim 1, wherein, with a plurality of different ranges of search (SD) used as parameters for the search, the number of all deployed vehicles (4) and the number of vehicles (4) to be distributed within said area are used as a basis for selecting one of said different ranges of search (SD) so that a predetermined number of vehicles (4) to be redistributed will not be exceeded.

4. A vehicle distribution system according to claim 1, wherein, with a plurality of different ranges of search (SD) used as parameters for the search, the number of all deployed vehicles (4) within said area and an average waiting time are used as a basis for selecting one of said different ranges of search (SD) so that a predetermined maximum waiting time will not be exceeded.

5. A vehicle distribution system according to claim 1, wherein said range of search (SD) may vary in the course of a day.

6. A vehicle distribution system according to claim 5, wherein said range of search (SD) is shortened if said predicted ride demand data exceed a predetermined level during the day.

7. A vehicle distribution system according to claim 1, wherein a product of the number of redistributed vehicles (4) and an average waiting time is simulated using a range of search (SD) as a parameter, said range of search (SD) being selected in such a manner that the simulated product will be minimized.

8. A vehicle distribution system according to claim 1, wherein, if the number of all deployed vehicles (4). within said area is smaller than a predetermined count, said range of search (SD) is set approximately for a maximum travel time required for vehicles (4) to be redistributed between ports (P1, P2, P3, P4, P5).

9. A vehicle distribution system according to claim 1, wherein, if the number of vehicles (4) accommodated in a parking lot of a given port (P1, P2, P3, P4, P5) is at most the sum of said existing vehicle count and said predicted arriving vehicle count for the port (P1, P2, P3, P4, P5) in question, said vehicle redistributing means (105) redistributes vehicles (4) to said port (P1, P2, P3, P4, P5) regardless of whether said port (P1, P2, P3, P4, P5) has any surplus vehicle (4).

10. A vehicle distribution system according to claim 9, wherein said vehicle redistributing means redistributes vehicles (4) to the port (P1, P2, P3, P4, P5) having the smallest existing vehicle count.

## Patentansprüche

1. Fahrzeugverteilungssystem zum Verteilen von Fahrzeugen (4) zwischen einer Mehrzahl von Stationen (P1, P2, P3, P4, P5) innerhalb eines Bereichs in Antwort auf Fahranfragen, welche an jeder der Stationen (P1, P2, P3, P4, P5) generiert werden, wobei das Fahrzeugverteilungssystem umfasst:
ein Speichermittel (11) für vorhergesagte Fahranfrage-Daten zum Speichern von vorhergesagten Fahranfrage-Daten, welche auf Grundlage von statistischen Fahranfrage-Daten bezüglich aller Stationen (P1, P2, P3, P4, P5) ermittelt wurden;
ein Fahrzeuganzahl-Erfassungsmittel (23) zum Erfassen einer Anzahl vorhandener Fahrzeuge an jeder der Stationen (P1, P2, P3, P4, P5);
ein Anfrage-Erfassungsmittel (20) zum Erfassen einer Fahranfrage-Information, welche umfasst eine Anzahl momentaner Fahranfragen sowie eine Bestimmungsort-Information bezüglich jeder der Stationen (P1, P2, P3, P4, P5);
ein Vorhersagemittel für ankommende Fahrzeuge zum Vorhersagen der Ankünfte von von anderen Stationen (P1, P2, P3, P4, P5) ausgehenden Fahrzeugen (4) an jeder Station (P1, P2, P3, P4, P5) als eine Anzahl vorhergesagter ankommender Fahrzeuge auf Grundlage der Bestimmungsort-Information;
ein Überschuss- und Fehlmenge-Berechnungsmittel (104) zum Berechnen entweder eines Überschusses oder einer Fehlmenge an Fahrzeugen (4) an jeder der Stationen (P1, P2, P3, P4, P5) durch einen Vergleich innerhalb eines Suchbereichs (SD), welcher repräsentiert ist durch eine vorbestimmte Zeitdauer an jeder Station (P1, P2, P3, P4, P5), der Anzahl momentaner Fahranfragen und der vorhergesagten Fahranfrage-Daten mit der Anzahl vorhandener Fahrzeuge und der Anzahl vorhergesagter ankommender Fahrzeuge; und
ein Fahrzeug-Umverteilungsmittel (105) zum Umverteilen von Fahrzeugen (4) von einer Station (P1, P2, P3, P4, P5) mit einem Überschuss an Fahrzeugen (4) zu einer Station (P1, P2, P3, P4, P5), welcher es an Fahrzeugen (4) mangelt, auf Grundlage der Ergebnisse der Berechnung, welche entweder den Überschuss oder die Fehlmenge an Fahrzeugen (4) anzeigen.

2. Fahrzeugverteilungssystem nach Anspruch 1, wobei der Suchbereich (SD) für wenigstens eine Minimalfahrzeit, welche zum Umverteilen erforderlich ist, um die Fahrzeuge (4) zwischen den Stationen (P1, P2, P3, P4, P5) zu bewegen, eingestellt ist.

3. Fahrzeugverteilungssystem nach Anspruch 1, wobei bei einer Mehrzahl von unterschiedlichen Suchbereichen (SD), welche als Parameter für die Suche verwendet werden, die Zahl aller eingesetzten Fahrzeuge (4) und die Zahl der innerhalb des Bereichs zu verteilenden Fahrzeuge (4) als eine Grundlage zum Auswählen eines der unterschiedlichen Suchbereiche (SD) verwendet werden, sodass eine vorbestimmte Zahl von umzuverteilenden Fahrzeugen (4) nicht überschritten wird.

4. Fahrzeugverteilungssystem nach Anspruch 1, wobei bei einer Mehrzahl von unterschiedlichen Suchbereichen (SD), welche als Parameter für die Suche verwendet werden, die Zahl aller eingesetzten Fahrzeuge (4) innerhalb des Bereichs und eine Durchschnittswartezeit als eine Grundlage zum Auswählen eines der unterschiedlichen Suchbereiche (SD) verwendet werden, sodass eine vorbestimmte Maximalwartezeit nicht überschritten wird.

5. Fahrzeugverteilungssystem nach Anspruch 1, wobei der Suchbereich (SD) im Verlauf eines Tages variieren kann.

6. Fahrzeugverteilungssystem nach Anspruch 5, wobei der Suchbereich (SD) dann verkürzt wird, wenn die vorhergesagten Fahranfrage-Daten ein vorbestimmtes Maß während des Tages überschreiten.

7. Fahrzeugverteilungssystem nach Anspruch 1, wobei ein Produkt der Zahl umverteilter Fahrzeuge (4) und einer Durchschnittswartezeit unter Verwendung eines Suchbereichs (SD) als einen Parameter simuliert wird, wobei der Suchbereich (SD) derart ausgewählt wird, dass das simulierte Produkt minimal sein wird.

8. Fahrzeugverteilungssystem nach Anspruch 1, wobei der Suchbereich (SD) dann, wenn die Zahl aller eingesetzten Fahrzeuge (4) innerhalb des Bereichs kleiner ist als eine vorbestimmte Anzahl, annäherungsweise für eine Maximalfahrdauer eingestellt wird, welche für die Fahrzeuge (4) erforderlich ist, um zwischen den Stationen (P1, P2, P3, P4, P5) umverteilt zu werden.

9. Fahrzeugverteilungssystem nach Anspruch 1, wobei das Fahrzeug-Umverteilungsmittel (105) dann, wenn die Zahl der Fahrzeuge (4), welche in einem Parkplatz einer vorgegebenen Station (P1, P2, P3, P4, P5) aufgenommen sind, höchstens die Summe der Anzahl vorhandener Fahrzeuge und der Anzahl vorhergesagter ankommender Fahrzeuge für die in Frage stehende Station (P1, P2, P3, P4, P5) ist, Fahrzeuge (4) zu der Station (P1, P2, P3, P4, P5) umverteilt, und zwar ungeachtet davon, ob die Station (P1, P2, P3, P4, P5) Überschuss-Fahrzeug (4) aufweist.

10. Fahrzeugverteilungssystem nach Anspruch 9, wobei das Fahrzeug-Umverteilungsmittel Fahrzeuge (4) zu der Station (P1, P2, P3, P4, P5) umverteilt, welche die kleinste Anzahl vorhandener Fahrzeuge aufweist.

## Revendications

1. Système de distribution de véhicules pour distribuer des véhicules (4) entre une pluralité de ports (P1, P2, P3, P4, P5) dans une zone en réponse à des demandes de course générées à chacun desdits ports (P1, P2, P3, P4, P5), ledit système de distribution de véhicules comprenant :
des moyens de stockage de données de demandes de course prévues (11) pour stocker des données de demandes de course prévues établies sur la base de données de demandes de course statistiques concernant tous les ports (P1, P2, P3, P4, P5) ;
des moyens de détection de compteur de véhicules (23) pour détecter un compteur de véhicules existants à chacun desdits ports (P1, P2, P3, P4, P5) ;
des moyens de détection de demande (20) pour détecter des informations de demande de course comprenant un compteur de demandes de course actuel et des informations de destination concernant chacun desdits ports (P1, P2, P3, P4, P5) ;
des moyens de prédiction d'arrivées de véhicule pour prédire les arrivées de véhicules (4) à chaque port (P1, P2, P3, P4, P5) depuis les autres ports (P1, P2, P3, P4, P5) en tant que compteur de véhicules arrivants prévu sur la base desdites informations de destination ;
des moyens de calcul de surplus et de pénurie (104) pour calculer un surplus ou une pénurie de véhicules (4) à chacun desdits ports (P1, P2, P3, P4, P5) en comparant, dans une plage de recherche (50) représentée par une durée prédéterminée à chaque port (P1, P2, P3, P4, P5), ledit compteur de demandes de course actuel et lesdites données de demandes de course prédites, avec ledit compteur de véhicules existants et ledit compteur de véhicules arrivants prédits ; et
des moyens de redistribution de véhicules (105) pour redistribuer les véhicules sur un port (P1, P2, P3, P4, P5) ayant des véhicules en surplus (4) vers un port (P1, P2, P3, P4, P5) manquant de véhicules (4) sur la base des résultats du calcul indiquant ledit surplus ou ladite pénurie de véhicules (4).

2. Système de distribution de véhicules selon la revendication 1, dans lequel ladite plage de recherche (50) est définie pour au moins un temps de déplacement minimal requis pour déplacer des véhicules (4) entre les ports (P1, P2, P3, P4, P5) pour redistribution.

3. Système de distribution de véhicules selon la revendication 1, dans lequel, avec une pluralité de plages de recherche (50) différentes utilisées en tant que paramètres pour la recherche, le nombre de tous les véhicules (4) déployés et le nombre de véhicules (4) à distribuer dans ladite zone sont utilisés en tant que base pour sélectionner une desdites différentes plages de recherche (50) de sorte qu'un nombre prédéterminé de véhicules (4) à redistribuer ne soit pas dépassé.

4. Système de distribution de véhicules selon la revendication 1, dans lequel, avec une pluralité de plages de recherche (50) différentes utilisées en tant que paramètres pour la recherche, le nombre de tous les véhicules (4) déployés dans ladite zone et un temps d'attente moyen sont utilisés en tant que base pour sélectionner une desdites différentes plages de recherche (50) de sorte qu'une valeur prédéterminée de temps d'attente ne soit pas dépassée.

5. Système de distribution de véhicules selon la revendication 1, dans lequel ladite plage de recherche (50) peut varier au cours d'un jour.

6. Système de distribution de véhicules selon la revendication 1, dans lequel ladite plage de recherche (50) est raccourcie si lesdites données de demandes de course prédites dépassent un niveau prédéterminé durant la journée.

7. Système de distribution de véhicules selon la revendication 1, dans lequel un produit du nombre de véhicules redistribués (4) et d'un temps d'attente moyen est simulé en utilisant une plage de recherche (50) en tant que paramètre, ladite plage de recherche (50) étant sélectionnée de telle manière que le produit simulé soit réduit au minimum.

8. Système de distribution de véhicules selon la revendication 1, dans lequel, si le nombre de tous les véhicules déployés (4) dans ladite zone est plus faible qu'un compteur prédéterminé, ladite plage de recherche (50) est définie approximativement pour un temps de déplacement maximal requis pour que les véhicules (4) soient redistribués entre les ports (P1, P2, P3, P4, P5).

9. Système de distribution de véhicules selon la revendication 1, dans lequel, si le nombre de véhicules (4) garés dans un parc de stationnement d'un port donné (P1, P2, P3, P4, P5) est au plus la somme dudit compteur de véhicules existants et dudit compteur de véhicules arrivants prévu pour le port (P1, P2, P3, P4, P5) en question, lesdits moyens de redistribution de véhicules (105) redistribuent des véhicules (4) audit port (P1, P2, P3, P4, P5) indépendamment du fait que ledit port (P1, P2, P3, P4, P5) ait ou non des véhicules (4) en surplus.

10. Système de distribution de véhicule selon la revendication 9, dans lequel lesdits moyens de redistribution de véhicules redistribuent des véhicules (4) au port (P1, P2, P3, P4, P5) ayant le plus faible compteur de véhicules existants.
